# EUROPÄISCHE PATENTANMELDUNG

(11) **EP 4 755 164 A1**
(43) Veröffentlichungstag der Anmeldung: **10.06.2026**
(21) Anmeldenummer: 25213673.4
(22) Anmeldetag: 05.11.2025
(51) Int. Cl.: A01C 7/20, A01B 63/22

(54) **SÄMASCHINE**

(30) Priorität: 09.12.2024 DE 102024136698
(71) Anmelder: Amazonen-Werke H. Dreyer SE & Co. KG, 49205 Hasbergen (DE)
(72) Erfinder: ERDMANN, Thomas, 49205 Hasbergen (DE); MERTENS, Daniel, 49205 Hasbergen (DE)

(57) **Zusammenfassung**

Die Erfindung betrifft eine Sämaschine (10) mit mehreren nebeneinander angeordneten Säscharen (1), die mit einem um eine Drehachse (D) drehbaren Scharbalken (2) derart verbunden sind, dass über eine Drehung des Scharbalkens (2) der Schardruck der Säscharen (1) eingestellt werden kann, und mit mindestens einem, vorzugsweise zwei, Stützrädern (3), die in Fahrtrichtung vor den Säscharen (1) angeordnet sind und über die die Sämaschine (10) gegenüber dem Untergrund abgestützt ist, wobei die Stützräder (3) an dem Scharbalken (2) gelagert sind.

## Beschreibung

Die Erfindung betrifft eine Sämaschine mit mehreren nebeneinander angeordneten Säscharen, die mit einem um eine Drehachse drehbaren Scharbalken derart verbunden sind, dass über eine Drehung des Scharbalkens der Schardruck der Säscharen eingestellt werden kann, und mit mindestens einem, vorzugsweise zwei, Stützrädern, die in Fahrtrichtung vor den Säscharen angeordnet sind und über die die Sämaschine gegenüber dem Untergrund abgestützt ist.

Entsprechende Sämaschinen können verwendet werden, um ein Saatgut in mehreren Reihen nebeneinander auf ein landwirtschaftliches Feld aufzubringen. Die Sämaschinen können dabei von einer Zugmaschine, wie bspw. einem Traktor, über das Feld gezogen werden und dabei das Saatgut auf das Feld aufbringen.

Die Abgabe von Saatgut erfolgt in der Regel über Säscharen, mit denen das Saatgut nicht nur auf das Feld aufgebracht, sondern im Grunde in das Feld eingebracht werden kann. Dafür kann vor dem Einbringen des Saatguts der Boden über die Säscharen leicht geöffnet, das Saatgut dann in die geöffnete Furche eingebracht und der Boden im Anschluss wieder geschlossen und ggf. etwas verdichtet werden. Damit mehrere Saatgutkörner in Reihen nebeneinander auf das Feld aufgebracht werden können, weist die Sämaschine dann entsprechend auch mehrere nebeneinander angeordnete Säscharen auf.

Ein wichtiger Parameter beim Sävorgang ist der Anpressdruck der Säscharen. Bei einem höheren Anpressdruck wird der Boden mitunter weiter geöffnet und das Saatgut dann ggf. in einer größeren Tiefe abgelegt als bei einem vergleichsweise niedrigeren Anpressdruck. Dabei spielt auch die Beschaffenheit des Bodens eine wichtige Rolle.

Zur Einstellung des Anpressdrucks sind die Säscharen an drehbaren Scharbalken gelagert. Dabei kann durch eine Drehung des Scharbalkens um eine sich in Regel quer zur Fahrtrichtung erstreckende Drehachse der Anpressdruck der Säscharen und damit auch die Ablagetiefe des Saatguts eingestellt werden.

Da entsprechende Sämaschinen oftmals recht groß sind, ist es in der Regel erforderlich, die Sämaschinen über Stützräder gegenüber dem Untergrund bzw. dem Feld abzustützen. Dabei ist es bekannt, die Stützräder in Fahrtrichtung vor den Säscharen anzuordnen, insbesondere in Fahrtrichtung links und rechts der Zugmaschine. Oftmals genügen dabei zwei Stützräder, da auch die Säscharen mit dem Boden in Kontakt stehen und insofern ebenfalls eine gewisse Stützwirkung aufweisen.

Die Stützräder sind in der Regel an einem bspw. im Wesentlichen rechteckig ausgebildeten Maschinenrahmen angeordnet, der als grundlegende Tragstruktur der Sämaschine fungiert und an dem, zumindest mittelbar, auch die Säschare angeordnet sein können.

Zwar hat sich diese Ausgestaltung insbesondere im Hinblick auf die Stabilität durchaus bewährt, allerdings ist der erforderliche Bauraum aufgrund der Befestigung der Stützräder an dem Maschinenrahmen vergleichsweise groß.

Die Erfindung stellt sich davon ausgehend die **Aufgabe**, eine Sämaschine anzugeben, die zwar ebenfalls über in Fahrtrichtung vor den Säscharen angeordnete Stützräder abgestützt ist, die sich allerdings durch einen kompakteren Aufbau auszeichnet.

Diese Aufgabe wird bei einer Sämaschine der eingangs genannten Art dadurch **gelöst** , dass die Stützräder an dem Scharbalken gelagert sind.

Durch diese Ausgestaltung kommt dem bzw. den Scharbalken eine Doppelfunktion zu. Denn diese dienen nicht nur zur Lagerung der Säscharen, sondern zudem auch zur Lagerung der Stützräder. Auf eine Lagerung der Stützräder am Maschinenrahmen kann somit verzichtet werden, was zu einem insgesamt kompakteren Aufbau führt.

Gemäß einer vorteilhaften Weiterbildung der Erfindung wird vorgeschlagen, dass die Stützräder über eine Hubvorrichtung zwischen einer Arbeitsstellung und einer Transportstellung hin und her bewegbar sind. Die Stützräder lassen sich somit in der Höhe verstellen, wodurch sich dann auch die Lage der Sämaschine gegenüber dem Feld entsprechend einstellen lassen kann. Über die Hubvorrichtung können die Stützräder unabhängig von den Säscharen bewegt bzw. höhenverstellt werden.

In der Arbeitsstellung können die Stützräder mit dem Feld in Kontakt stehen und insofern ihre Abstützfunktion ausüben. Dabei können verschiedene Arbeitsstellungen vorgesehen sein, um dahingehend die Lage der Sämaschine gegenüber dem Feld anzupassen. Die Stützräder können in der Arbeitsstellung auch eine Führungsfunktion haben, was insbesondere auch mit der Anordnung der Stützräder vor den Säscharen einhergeht. In der Transportstellung können die Stützräder von dem Boden abgehoben sein. In dieser Stellung kann auch vorgesehen sein, dass die Sämaschine zumindest teilweise eingeklappt bzw. derart angeordnet ist, dass diese nicht zum Ausbringen von Saatgut verwendet, sondern vielmehr transportiert werden kann, bspw. über eine normale Straße.

In einer alternativen Ausgestaltung kann auch vorgesehen sein, dass die Stützräder nicht über Hubvorrichtungen, sondern über eine Drehung des Scharbalkens entsprechend höhenverstellbar sein können. Durch diese Ausgestaltung kommt dem bzw. den Scharbalken auch eine funktionale Doppelfunktion zu. Denn dieser dient dann nicht nur zur Verstellung der Säscharen, sondern zudem auch zur Verstellung der Stützräder. Insofern kann dann auf zusätzliche Hubvorrichtungen zur Höhenverstellung der Säscharen verzichtet werden. Dies kann insgesamt zu einem noch kompakteren Aufbau führen.

Zudem können durch die funktionale Koppelung der Stützräder und der Säscharen diese gemeinsam in der Höhe verstellt werden, was insofern den Steuerungs- und Regelungsaufwand verringern kann. Alternativ kann aber auch vorgesehen sein, dass die Säscharen und die Stützräder unabhängig voneinander höhenverstellbar sind. Auch dies lässt sich über eine Drehung der Scharbalken realisieren, bspw. durch geeignete Zwischenglieder.

Weiterhin hat es sich als vorteilhaft herausgestellt, wenn die Stützräder um die Drehachse zwischen der Arbeitsstellung und der Transportstellung hin und her schwenkbar sind. Durch eine entsprechende Schwenkbewegung wird auf konstruktiv einfache Weise eine Bewegung der Stützräder zwischen der Arbeitsstellung bzw. den verschiedenen Arbeitsstellungen und der Transportstellung realisiert. In der Regel ist eine entsprechende Höhenverstellung über eine Schwenkbewegung sowohl in konstruktiver Hinsicht als auch im Hinblick auf die wirkenden Kräfte gegenüber einer linearen Bewegung vorteilhaft. Die Drehachse kann als gemeinsame Drehachse für die Stützräder und die Säschar bzw. die Säscharen fungieren, so dass diese zur Bewegung um dieselbe Achse verschwenkt werden können. Dies hat konstruktive Vorteile und führt zu einem insgesamt kompakten Aufbau.

Gemäß einer vorteilhaften Weiterbildung der Erfindung ist ferner vorgesehen, dass die Stützräder drehentkoppelt an dem Scharbalken gelagert sind. Durch diese Ausgestaltung resultiert durch eine Drehbewegung des Scharbalkens, um die Säschare zu bewegen, nicht zwangsläufig unmittelbar auch eine Bewegung der Stützräder. Vielmehr lassen sich durch die Drehentkoppelung die Säschare und die Stützräder unabhängig voneinander bewegen und in der Höhe verstellen. Die Stützräder können über ein Drehlager an dem Scharbalken gelagert sein, wobei das Drehlager insofern eine relative Drehbewegung des Scharbalkens zulässt, ohne die Stützräder zu bewegen.

In konstruktiver Hinsicht hat es sich weiterhin als vorteilhaft herausgestellt, wenn die Stützräder über eine Stützradkonsole an dem Scharbalken gelagert sind. Durch die Stützradkonsole können die Stützräder mit dem Scharbalken verbunden sein. Die Stützradkonsole ist dabei vorteilhaft derart ausgebildet, dass die Stützräder über die Stützradkonsole in der Höhe bewegt bzw. verschwenkt werden können. Die Stützradkonsole kann als Radschwinge ausgebildet sein, die auf der einen Seite mit dem jeweiligen Stützrad und auf der anderen Seite mit dem Scharbalken verbunden ist. Das Stützrad kann dabei um seine Drehachse drehbar in der Stützradkonsole gelagert sein. Jedes Stützrad kann über eine eigene Stützradkonsole mit demselben Scharbalken verbunden sein.

Im Hinblick auf die Ausgestaltung der Sämaschine ist gemäß einer weiteren vorteilhaften Ausgestaltung vorgesehen, dass diese einen Maschinenrahmen und einen mit dem Maschinenrahmen verbundenen Lagerhalter aufweist. Bei dem Maschinenrahmen kann es sich um eine grundlegende Tragstruktur handeln, an der die einzelnen Komponenten der Sämaschine angeordnet sind und die insofern als Grundrahmen fungiert. Der Maschinenrahmen kann somit auch als Montagerahmen bezeichnet werden. Der Maschinenrahmen kann insgesamt eine rechteckige Geometrie aufweisen und mehrere sich parallel zur Fahrtrichtung erstreckende und insbesondere unbewegliche Streben aufweisen, an denen dann jeweils Elemente befestigt sein können. Zwischen den entsprechenden Streben können dann jeweils Scharbalken angeordnet sein, so dass die Streben und die Scharbalken in Fahrtrichtung abwechselnd hintereinander angeordnet sein können. Die Streben und die Scharbalken können sich dabei parallel zueinander quer zur Fahrtrichtung erstrecken. Der Lagerhalter kann undrehbar mit dem Maschinenrahmen bzw. mit den Streben verbunden sein. Zur Befestigung können insbesondere U-förmig ausgebildete Befestigungsbügel vorgesehen sein, die den Maschinenrahmen bzw. die Streben umgreifen und die endseitig mit dem Lagerhalter verbunden sind. Somit kann der Langerhalter mit der Unterseite des Maschinenrahmens bzw. den Streben verbunden sein.

Ferner kann der Lagerhalter auch mit dem Scharbalken verbunden sein. Konkret kann sich der Scharbalken durch den Lagerhalter hindurch erstrecken, so dass der Lagerhalter im Grunde am Scharbalken und am Maschinenrahmen angeordnet, insbesondere aufgehängt, sein kann. Der Lagerhalter kann dabei sich insbesondere in Fahrtrichtung erstreckende Stege aufweisen, die die Streben des Maschinenrahmens mit dem jeweiligen Scharbalken verbinden.

Ferner kann die Hubvorrichtung auf der einen Seite mit dem Lagerhalter und auf der anderen Seite mit der Stützradkonsole verbunden sein. Durch diese Ausgestaltung kann bei einem Ein- oder Ausfahren der Hubvorrichtung eine Schwenkbewegung der Stützradkonsole gegenüber dem feststehenden Lagerhalter erreicht werden und somit eine entsprechende Relativbewegung des Stützrades.

Gemäß einer weiteren vorteilhaften Ausgestaltung wird vorgeschlagen, dass der Lagerhalter zwei beabstandet zueinander angeordnete Lagerhalterelemente aufweist. Die beiden Lagerhalterelemente können als Gleichteile ausgebildet sein und jeweils mit dem Maschinenrahmen bzw. einer Strebe des Maschinenrahmens und einem Scharbalken verbunden sein. Der Abstand der beiden Lagerhalterelemente kann im Wesentlichen der Breite des Stützrades entsprechen, welches an der mit dem Lagerhalter verbundenen Stützradkonsole angeordnet ist. Durch die beiden Lagerhalterelemente weist der Lagerhalter eine vergleichsweise hohe mechanische Stabilität auf, was einen zuverlässigen Betrieb und eine zuverlässige Bewegung der Stützräder sicherstellt.

In einer besonders bevorzugten Ausgestaltung der Erfindung ist vorgesehen, dass die Stützradkonsole längs der Drehachse verschieblich am Scharkalben gelagert ist. Durch eine Lagerung können die Stützradkonsole und damit auch das entsprechende Stützrad in Querrichtung bzw. quer zur Fahrtrichtung ausgerichtet werden. Insbesondere kann somit sichergestellt werden, dass die beiden Stützräder möglichst denselben Abstand zur Längsachse der Sämaschine aufweisen. Aufgrund der verschieblichen Lagerung der Stützradkonsole kann entsprechend auch der Lagerhalter bzw. können die beiden Lagerhalterelemente entsprechend verschieblich gelagert sein. Die Stützradkonsole kann somit längs des Scharbalken bzw. längs der Streben des Maschinenrahmens verschiebbar angeordnet sein. Wenn die entsprechende Querposition des bzw. der Stützräder jedoch einmal korrekt eingestellt ist, kann die Stützradkonsole in dieser Position bzw. durch ein Festziehen der Befestigungsbügel fixiert werden. Denn vorteilhaft ist die Stützradkonsole nur gemeinsam mit dem Lagerhalter verschiebbar, so dass diese Elemente insofern in Querrichtung nicht relativ zueinander bewegbar, sondern dahingehend miteinander bewegungsgekoppelt sind. Um dies konstruktiv zu erreichen, kann der Lagerhalter insbesondere im Verbindungsbereich mit dem Scharbalken, gabelförmige Aufnahmen aufweisen, in die die Stützradkonsole eingreifen kann, so dass die Stützradkonsole dann in Querrichtung in dem Lagerhalter gesichert ist.

Gemäß einer vorteilhaften Weiterbildung der Erfindung ist eine Begrenzungsvorrichtung zur Begrenzung der Bewegung des Stützrades vorgesehen. Durch die Begrenzungsbewegung kann eine Bewegung des Stützrades zwischen der Arbeitsstellung bzw. den Arbeitsstellungen und der Transportstellung begrenzt werden. Eine Bewegung in einen unerwünschten Bereich kann somit verhindert werden. Der Begrenzungsvorrichtung kann dabei auch eine Führungsfunktion zukommen, die eine zuverlässige Bewegung der Stützradkonsole bzw. des Stützrades sicherstellt. Besonders bevorzugt ist es, wenn durch die Begrenzungsvorrichtung die Hubvorrichtung insbesondere in der Arbeitsstellung kraftfrei bleiben kann. Die einwirkenden Kräfte können dann in der Arbeitsstellung, also wenn die Sämaschine über das Feld gezogen wird und mitunter große Kräfte auf die Stützräder und die Stützradkonsole wirken, über die Begrenzungsvorrichtung aufgenommen und abgeleitet werden. Die Hubvorrichtung kann dann außerhalb des Kraftflusses liegen, so dass auch ein Nachtakten bzw. aktives Halten des Stützrades über die Hubvorrichtung nicht erforderlich ist. Die mechanische Belastung der Hubvorrichtung lässt sich dadurch deutlich verringern.

Hinsichtlich der konstruktiven Ausgestaltung der Begrenzungsvorrichtung wird weiter vorgeschlagen, dass die Begrenzungsvorrichtung einen Anschlagshebel aufweist, der auf der einen Seite schwenkbeweglich an dem Lagerhalter angelenkt ist und der auf der anderen Seite eine Führung aufweist, in der ein Führungsbolzen angeordnet ist. Bei einer Bewegung zwischen der Arbeitsstellung und der Transportstellung kann sich der Führungsbolzen in der Führung hin und her bewegen. Der Führungsbolzen kann dabei Teil der Stützradkonsole sein und somit zusammen mit dem jeweiligen Stützrad bewegbar sein. Der Führungsbolzen kann seitlich gegenüber der Stützradkonsole hervorstehen und in die Führung hineinreichen. Die Führung ist vorteilhaft als Langloch ausgebildet, in welcher der Führungsbolzen bei einer Bewegung der Stützradkonsole hin und her gleiten kann.

Der Anschlagshebel kann von insgesamt länglicher Geometrie sein und bei einer Bewegung des Stützrades bzw. der Lagerkonsole um seinen Lagerpunkt am Lagerhalter verschwenkt werden. Vorteilhaft ist der Anschlagshebel an einem der beiden Lagerhalterelemente angeordnet. Dahingehend ist nicht zwangsläufig eine symmetrische Ausgestaltung erforderlich, sondern die Anordnung eines Anschlagshebels an nur einem Lagerhalterelement kann zur Begrenzung der Bewegung der Stützradkonsole ausreichend sein.

Im Hinblick auf den Anschlagshebel hat es sich als vorteilhaft herausgestellt, wenn dieser zwischen einer Freigabestellung, in welcher das Stützrad zwischen der Arbeitsstellung und der Transportstellung hin und her bewegbar ist, und einer Sperrstellung, in welcher eine Bewegung des Stützrades gesperrt ist, bewegbar ist. In der Sperrstellung ist keine Bewegung des Stützrades möglich. Insofern kann der Anschlagshebel auch als Sperre fungieren, der das Stützrad dann in der Arbeitsstellung sichert. Dadurch kann dann auch die Hubvorrichtung in der Arbeitsstellung kraftfrei gehalten werden. In der Freigabestellung kann die Stützradkonsole hingegen bewegbar sein. Der Anschlagshebel kann zwischen der Sperrstellung und der Freigabestellung um seinen Lagerpunkt am Anschlagshebel hin und her schwenkbar sein.

Gemäß einer konstruktiven Weiterbildung der Erfindung ist vorgesehen, dass die beiden Enden der Führung als Anschläge ausgebildet sind, wobei der Führungsbolzen in der Transportstellung an einem Anschlag und in der Arbeitsstellung an dem anderen Anschlag anliegt. Durch die Anschläge kann eine weitergehende Bewegung der Stützräder verhindert werden. Die Position des Stützrades in der Transportstellung und in der Arbeitsstellung kann somit über die Ausgestaltung bzw. die Länge der Führung vorgegeben sein. Ein Anschlag kann dabei der Transportstellung und der andere Anschlag kann der Arbeitsstellung zugeordnet sein.

Gemäß einer besonders bevorzugten Weiterbildung der Erfindung ist vorgesehen, dass die Führung im Bereich eines Anschlags, insbesondere im Bereich des der Arbeitsstellung zugeordneten Anschlags, eine Abwinkelung aufweist, wobei der Führungsbolzen in der Sperrstellung in der Abwinkelung angeordnet ist. Wenn sich der Führungsbolzen in der Abwinkelung befindet, ist eine Bewegung des Stützrades nicht mehr möglich. Vielmehr ist der Führungsbolzen formschlüssig in der Abwinkelung angeordnet und somit nicht mehr bewegbar. Vorteilhaft ist die Abwinkelung gegenüber der Führung um insbesondere 90 Grad abgewinkelt. Wenn das Stützrad bzw. die Stützradkonsole derart bewegt wird, kann der Führungsbolzen in der Führung in Richtung der Abwinkelung gleiten, dass dieser beim Erreichen der Abwinkelung selbsttätig in diese einrasten. Der Anschlagshebel kann, wenn der Führungsbolzen die Abwinkelung erreicht, schwerkraftgetrieben und somit rein passiv um den Lagerhalter verschwenkt werden. Dadurch wird die Abwinkelung über den Führungsbolzen bewegt, so dass der Führungsbolzen und die Abwinkelung dann miteinander verrastet sind. Eine Rückbewegung ist dann nicht mehr möglich. Auf das Stützrad einwirkende Kräfte werden dann über den Führungsbolzen auf den Anschlagshebel übertragen und von diesem in den Maschinenrahmen eingeleitet.

Um ein entsprechend gesperrtes Stützrad wieder zu bewegen, kann vorgesehen sein, dass der Anschlagshebel über einen Freigabehebel aus der Sperrstellung in die Freigabestellung bewegbar ist. Wenn der Anschlagshebel zurück in die Freigabestellung verschwenkt wird, insbesondere entgegen der Schwerkraft, befindet sich der Führungsbolzen wieder in der Führung, so dass eine Bewegung des Anschlagshebels und damit auch des Stützrades wieder freigegeben ist. Der Freigabehebel kann somit den Anschlagshebel in einer Richtung aktiv bewegen und diesen aus der Sperrstellung in die Freigabestellung überführen. Dabei kann die Abwinkelung von dem Lagerbolzen abgehoben werden. Der Freigabehebel kann den Anschlagshebel um den Drehpunkt am Lagerhalter drehen.

Im Hinblick auf den Freigabehebel hat es sich als vorteilhaft herausgestellt, wenn dieser um die Drehachse drehbar gelagert ist. Diese Ausgestaltung hat sich insbesondere dahingehend als vorteilhaft herausgestellt, dass zum Antrieb bzw. zur Bewegung des Freigabehebels nicht zwangsläufig ein zusätzlicher Antrieb vorhanden sein muss. Denn es kann vorgesehen sein, dass der Freigabehebel über eine Drehung des Scharbalkens bewegt wird, so dass die Überführung des Anschlagshebels von der Sperrstellung in die Freigabestellung an die Drehbewegung des Scharbalkens gekoppelt ist. Gleichwohl kann aber auch vorgesehen sein, dass der Freigabehebel über einen externen Antrieb unabhängig von einer Drehbewegung des Scharbalkens bewegbar ist.

Gemäß einer weiteren vorteilhaften Ausgestaltung der Erfindung ist vorgesehen, dass die Stützradkonsole mindestens eine Einstecköffnung zum Einstecken eines Steckanschlags aufweist, wobei der Steckanschlag eine Bewegung der Stützradkonsole gegenüber dem Steckanschlag begrenzt. Wenngleich die Führung des Anschlagshebels bereits zwei Anschläge umfasst, kann über den Steckanschlag ein zusätzlicher Anschlag bereitgestellt werden, der eine Bewegung der Stützradkonsole begrenzen kann. Insofern kann durch diesen Anschlag die Bewegung der Stützradkonsole zumindest in einer Richtung begrenzt werden, und zwar bevor der Führungsbolzen das entsprechende Ende der Führung erreicht. Dabei kann vorgesehen sein, dass der Steckanschlag seitlich gegenüber der Stützradkonsole hervorsteht und dieser dann in einer bestimmten Stellung an dem Anschlagshebel anschlägt, so dass eine weitergehende Bewegung verhindert wird. Der Steckanschlag kann per Hand in eine entsprechende Einstecköffnung eingesteckt werden.

In konstruktiver Hinsicht kann der Steckanschlag einen Handhabungsbereich aufweisen, über den der Steckanschlag per Hand gegriffen werden kann. Ferner kann der Steckanschlag einen Anschlagskopf aufweisen. Der Anschlagskopf kann wiederum eine oder auch mehrere Anschlagsflächen aufweisen, an denen der Anschlagshebel bei einer Bewegung der Stützradkonsole anschlagen kann. Ferner kann der Steckanschlag einen Einsteckabschnitt aufweisen, über den er in die Einstecköffnung eingesteckt werden kann. Der Einsteckabschnitt kann dabei von stiftförmiger Geometrie sein. Wenn der Steckanschlag entsprechend positioniert ist, kann der Anschlagskopf seitlich gegenüber der Stützradkonsole hervorstehen, so dass dieser bzw. die dem Anschlagshebel zugewandte Anschlagsfläche eine Bewegung der Stützradkonsole begrenzen kann. Die Einstecköffnung kann eckig bzw. polygonförmig ausgebildet sein, so dass der eingesteckte Steckanschlag undrehbar in der Einstecköffnung angeordnet ist.

Um über den Steckanschlag mehrere Anschlagspositionen zu definieren, hat es sich weiterhin als vorteilhaft herausgestellt, wenn die Stützradkonsole mehrere Einstecköffnungen aufweist, wobei der Steckanschlag wahlweise in eine der Einstecköffnungen einsteckbar ist. Durch die verschiedenen Einstecköffnungen ändert sich die Position des eingesteckten Steckanschlags, wodurch sich dann auch verschiedene Anschlagspositionen ergeben. Vorzugsweise sind zwei nebeneinander angeordnete Einstecköffnungen vorgesehen, die wahlweise ausgewählt werden können. Insbesondere lässt sich über die verschiedenen Anschlagspositionen das Stützrad in der Arbeitsstellung verstellen. Jeder Anschlagsposition kann somit eine Arbeitsposition zugeordnet sein.

Gemäß einer vorteilhaften Weiterbildung des Steckanschlags hat es sich als vorteilhaft herausgestellt, wenn dieser als Exzentersteckanschlag ausgebildet ist, der in Abhängigkeit seiner Ausrichtung unterschiedliche Anschläge definiert. Der Exzenteranschlag zeichnet sich dadurch aus, dass dieser in Abhängigkeit der Ausrichtung, wie er in die Einstecköffnung eingesteckt wird, einen unterschiedlichen Anschlag definiert. Der Anschlagskopf kann somit exzentrisch zum Einsteckabschnitt angeordnet sein, so dass eine Drehung des Steckanschlags unterschiedliche Anschläge definiert. Der Anschlagskopf kann blockförmig ausgestaltet sein und insbesondere vier Anschlagsflächen aufweisen, wobei jede Anschlagsfläche zu der Einstecköffnung bzw. zu dem Einsteckabschnitt einen etwas unterschiedlichen Abstand aufweisen kann. Im Falle von vier verschiedenen Anschlagsflächen und zwei verschiedenen Einstecköffnungen können somit insgesamt acht verschiedene Anschläge bereitgestellt werden. Berücksichtigt man zusätzlich noch die Möglichkeit, keinen Steckanschlag zu verwenden, lassen sich bis zu neun unterschiedliche Arbeitsstellungen definieren.

Gemäß einer vorteilhaften Weiterbildung der Erfindung ist vorgesehen, dass zwei schwenkbeweglich miteinander verbundene Hebel vorgesehen sind, wobei einer der Hebel schwenkbeweglich an der Stützradkonsole und der andere Hebel schwenkbeweglich an dem Lagerhalter angelenkt ist. Bei einer Bewegung der Stützradkonsole können sich auch die beiden Hebel relativ zueinander bewegen, das heißt, der Winkel der Hebel kann sich bei einer Bewegung der Stützradkonsole ändern. Die beiden Hebel können jeweils an einem Ende schwenkbeweglich miteinander verbunden sein und am gegenüberliegenden Ende kann der eine Hebel schwenkbeweglich mit der Stützradkonsole und der andere Hebel schwenkbeweglich mit dem Lagerhalter verbunden sein. Aufgrund der Koppelung mit den Hebeln kann über eine Feststellung der Hebel bzw. über eine Begrenzung der Bewegung der Hebel entsprechend auch die Bewegung der Stützradkonsole begrenzt werden. Es kann somit zur Feststellung bzw. Verriegelung der Stützradkonsole eine die Hebel verriegelnde Verriegelungsvorrichtung vorgesehen sein. Die Stützradkonsole kann somit über die beiden Hebel verriegelbar sein, insbesondere in der Arbeitsstellung. Die beiden Hebel können zusammen mit dem die Strebe mit dem Scharbalken verbindenden Steg des Lagerhalters und der Stützradkonsole ein Parallelogrammgestänge bilden.

Ferner hat es sich als vorteilhaft herausgestellt, wenn die beiden Hebel über einen Freigabehebel bewegbar sind. Da die beiden Hebel zwangsgekoppelt sind, genügt es zur Bewegung beider Hebel und somit auch der Stützradkonsole, einen der beiden Hebel zu bewegen. Es kann vorgesehen sein, dass einer der beiden Hebel, insbesondere der mit dem Lagerhalter verbundene Hebel, einen Führungsbolzen aufweist, der seitlich hervorsteht und der mit dem Freigabehebel zusammenwirken kann. Konkret kann der Freigabehebel bei einer Bewegung den Hebel über den Führungsbolzen verschwenken, wodurch dann auch die Position der Stützradkonsole verändert werden kann. Der Hebel kann somit durch den Freigabehebel um seinen Drehpunkt an dem Lagerhalter verschwenkt werden. Es ist möglich, dass der Freigabehebel über eine Drehbewegung des Scharbalkens bewegt wird. Der Freigabehebel kann dafür insbesondere endseitig mit dem Scharbalken drehgekoppelt sein. Weiterhin ist es aber auch möglich, dass der Freigabehebel als Anschlag fungiert, der eine Bewegung des Hebels bei einem Kontakt des Führungsbolzens mit dem Freigabehebel begrenzt.

Weitere Einzelheiten und Vorteile der Erfindung sollen nachfolgend anhand der beigefügten schematischen Zeichnungen näher erläutert werden. Darin zeigen:
- Fig. 1: eine Sämaschine mit einem Vorderwagen und einer Heckeinheit, die mehrere nebeneinander angeordnete Säschare aufweist;
- Fig. 2: eine perspektivische Ansicht eines vorlaufenden Stützrades zur Abstützung der Heckeinheit;
- Fig. 3: eine Explosionsansicht der das Stützrad lagernden Elemente;
- Fig. 4: eine perspektivische Ansicht eines Stützrades in einer Transportstellung;
- Fig. 5a, 5b: perspektivische Detailansichten des Stützrades und eines Anschlagshebels in einer Freigabestellung und in einer Sperrstellung einschließlich vergrößerter Detailansichten;
- Fig. 6a, 6b: weitere Ansichten der Freigabestellung und der Sperrstellung gemäß der Fig. 5a, 5b;
- Fig. 7a, 7b: Ansichten des Stützrades in der Transport- und in der Arbeitsstellung mit zwei Hebeln, die die Stützradkonsole mit dem Lagerhalter verbinden;
- Fig. 8: eine Detailansicht eines Steckanschlags zur Begrenzung der Bewegung des Stützrades;
- Fig. 9a, 9b: weitere Ansichten der Transportstellung und der Freigabestellung gemäß der Fig. 7a, 7b.

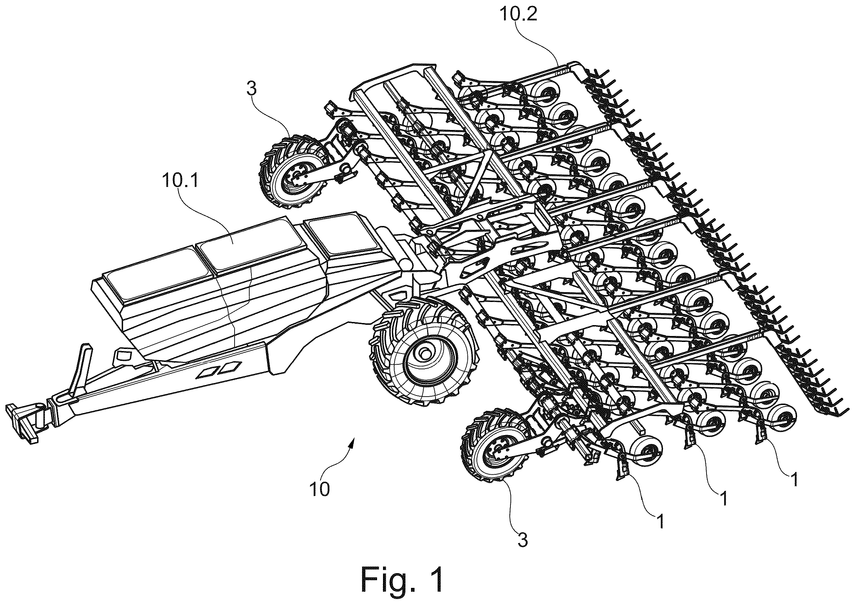

Die Darstellung der Fig. 1 zeigt eine Sämaschine 10, die einen Vorderwagen 10.1 und eine heckseitig mit dem Vorderwagen 10.1 verbundene Heckeinheit 10.2 aufweist. Der Vorderwagen 10.1 ist mit einem Saatgutbehälter versehen, in welchem das auf einem landwirtschaftlichen Feld auszubringende Saatgut bevorratet ist. Der Vorderwagen 10.1 ist am vorderen Ende an eine in der Darstellung der Fig. 1 nicht mit dargestellte Zugmaschine, wie bspw. einen Traktor, angekoppelt, über die die gesamte Sämaschine zur Ausbringung des Saatgutes über das Feld bewegt werden kann.

Die Heckeinheit 10.2 ist deutlich breiter als der Vorderwagen 10.1 und diese weist mehrere nebeneinander angeordnete Säschare 1 auf, über die das Saatgut auf das Feld aufgebacht werden kann. Bei jeder Überfahrt über das Feld kann somit auf einen Streifen des Feldes Saatgut aufgebracht werden, wobei der entsprechende Streifen des Feldes in etwa so breit wie die Breite der Heckeinheit 10.2 ist.

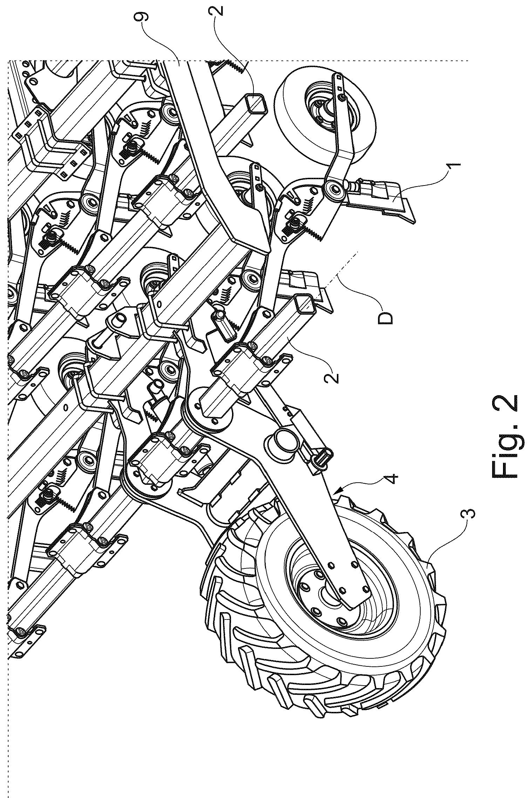

Die Heckeinheit 10.2 weist in einer Draufsicht eine im Wesentlichen rechteckige Geometrie auf, die auf einem entsprechend rechteckigen Maschinenrahmen 9 basiert. Der Maschinenrahmen 9 weist mehrere sich quer zur Fahrtrichtung erstreckende Streben und parallel zu den Streben angeordnete Scharbalken 2 auf, an denen jeweils mehrere Säscharen 1 nebeneinander angeordnet sind. Die Scharbalken 2 sind dabei drehbar an dem Maschinenrahmen 9 gelagert und um eine sich in Längsrichtung der Scharbalken 2 erstreckende Drehachse D drehbar. Die Drehachse D ist bspw. in der Darstellung der Fig. 2 zu erkennen. Über eine Drehbewegung des Scharbalkens 2 können die mit dem jeweiligen Scharbalken 2 verbundenen Säschare 1 in der Höhe verstellt werden.

Um die Heckeinheit 10.2 und damit auch die Sämaschine 10 insgesamt gegenüber dem Untergrund bzw. dem landwirtschaftlichen Feld abzustützen, weist die Heckeinheit 10.2 in dem Ausführungsbeispiel gemäß Fig. 1 zwei vorlaufende Stützräder 3 auf, wobei jeweils links und rechts des Vorderwagens 10.1 ein Stützrad 3 angeordnet ist.

Aufgrund der vergleichsweise großen Breite der Heckeinheit 10.2 können die beiden seitlich gegenüber dem Vorderwagen 10.1 hervorstehenden Abschnitte hochgeklappt werden, so dass sich dadurch die Breite der Sämaschine 10 insgesamt verringert. Dies ist bspw. für eine Straßenfahrt wichtig, da die Sämaschine 10 in der ausgeklappten Stellung die maximal zulässigen Maße in der Regel überschreitet. Wenn die Heckeinheit 10.2 entsprechend hochgeklappt ist, müssen die Säscharen 1 eingezogen bzw. angehoben werden, da diese sonst die Breite in der angehobenen Stellung vergrößern würden. Entsprechendes gilt auch für die Stützräder 3, die entsprechend zwischen einer Arbeitsstellung A, in welcher diese nach unten in Richtung des Feldes ausgefahren sind und die Sämaschine 10 gegenüber dem Feld abstützen, und einer Transportstellung T, in welcher die Stützräder 3 nach oben verschwenkt und insofern eingefahren sind, bewegbar sind.

Nachfolgend sollen nun die Ausgestaltung bzw. die Lagerung und die Verstellung eines Stützrades 3 beschrieben werden. Die Ausführungen gelten dabei in entsprechender Weise auch für die weiteren Stützräder 3.

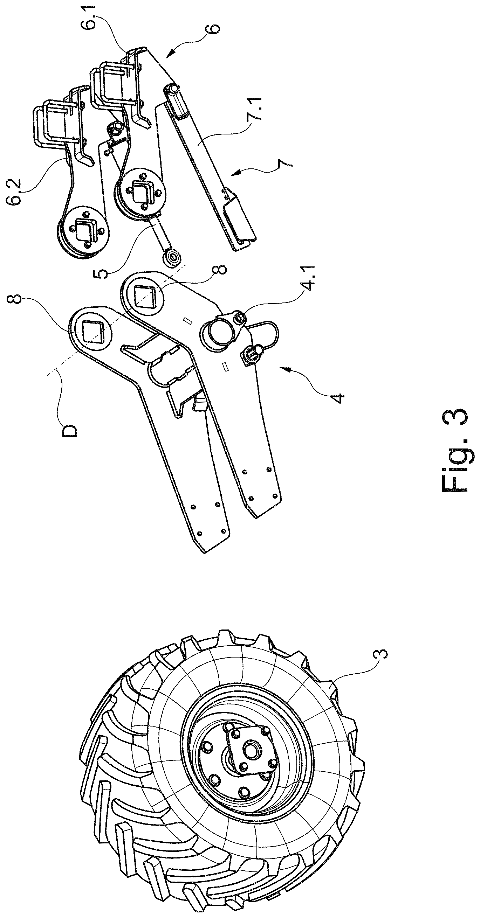

Gemäß der Darstellung der Fig. 3, die eine Explosionsansicht der das Stützrad 3 lagernden Elemente zeigt, ist zunächst eine Stützradkonsole 4 vorgesehen, in der das Stützrad 3 drehbar gelagert ist. Die Stützradkonsole 4 weist dafür zwei sich parallel zueinander erstreckende Wangen auf, zwischen denen das Stützrad 3 drehbar angeordnet ist, so dass dieses auf dem Feld abrollen kann.

In dem dem Stützrad 3 gegenüberliegenden Endbereich der Stützradkonsole 4 ist diese nach oben abgewinkelt und endseitig mit einem Scharbalken 2 verbunden. Das Stützrad 3 kann über die Stützradkonsole 4 an dem Scharbalken 2 gelagert sein. Dem Scharbalken 2 kommt somit eine Doppelfunktion zu und dieser dient nicht nur zur Lagerung der Säschare 1, sondern auch zur Lagerung des Stützrades 3.

Weiter rechts ist in der Darstellung der Fig. 3 ein Lagerhalter 6 zu erkennen, der über die beiden U-förmigen Befestigungsbügel 9.1 an einer Strebe des Maschinenrahmens 9 befestigt ist. Am anderen Ende ist der entsprechende Lagerhalter 6 über die in der Darstellung der Fig. 3 zu erkennenden Augen am Scharbalken 2 gelagert, wobei sich der Scharbalken relativ zu dem Lagerhalter 6 drehen kann. Das heißt, der Lagerhalter 6 ist feststehend und dieser bewegt sich bei einer Drehbewegung des Scharbalken 2 nicht mit. Der sich zwischen den Lagerbügeln und den Augen befindliche und sich im Wesentlichen in horizontaler Richtung erstreckende Bereich des Lagerhalters 6 wird dabei auch als Steg bezeichnet. Ferner besteht der Lagerhalter 6 aus zwei Lagerhalterelementen 6.1, 6.2, die als Gleichteile ausgebildet sind und die parallel zueinander angeordnet sind, so wie dies in der Darstellung der Fig. 3 weiterhin zu erkennen ist.

Um das Stützrad 3 nun zwischen der Transportstellung T und der Arbeitsstellung A hin- und herzubewegen, muss die Stützradkonsole 4 um die Drehachse D nach oben geschwenkt werden. Die Stützradkonsole 4 ist somit um dieselbe Drehachse D schwenkbar gelagert wie auch der Scharbalken 2.

Das Stützrad 3 bzw. die Stützradkonsole 4 kann nun auf verschiedene Arten bewegt werden. In einer Ausgestaltung ist die Stützradkonsole 4 mit dem Scharbalken 2 drehgekoppelt, sodass über eine Drehung des Scharbalkens 2 nicht nur die Säschare 1, sondern entsprechend auch das Stützrad 3 angehoben und abgesenkt werden kann. Die Stützradkonsole 4 dreht sich dabei entsprechend ebenfalls um die Drehachse D und diese wirkt wie ein Hebel, über den das Stützrad 3 in der Höhe verstellt wird. Da bei dieser Ausgestaltung die Drehung des Scharbalkens 2 für die Verstellung des Stützrades 3 sorgt, wird kein weiterer Antrieb zur Bewegung des Stützrades 3 benötigt.

In einer alternativen Ausgestaltung, die bspw. auch in der Darstellung der Fig. 3 dargestellt ist, ist die Stützradkonsole 4 drehbar mit dem Scharbalken 2 verbunden, das heißt, die Stützradkonsole 4 und der Scharbalken 2 sind voneinander drehentkoppelt und eine Drehbewegung des Scharbalkens 2 zur Verstellung der Säscharen 1 führt nicht zu einer Bewegung des Stützrades 3. Zur drehentkoppelten Lagerung der Stützradkonsole 4 an dem Scharbalken 2 weist die Stützradkonsole 4 ein Drehlager 8 bzw. es weisen die beiden Wangen der Stützradkonsole 4 jeweils ein Drehlager 8 auf. Das Drehlager 8 erlaubt eine Abstützung der Stützradkonsole 4 an dem Scharbalken 2, gleichzeitig aber eine Drehentkopplung.

Bei dieser Ausgestaltung ist zur Bewegung der Stützradkonsole 4 ein Antrieb vorgesehen. Der Antrieb ist als Hubvorrichtung 5 ausgebildet und in der Darstellung der Fig. 3 in Form eines Hydraulikzylinders gezeigt. Die Hubvorrichtung 5 ist an einem Ende schwenkbeweglich mit dem Lagerhalter 6 bzw. mit dem Lagerhalterelement 6.2 und am gegenüberliegenden Ende schwenkbeweglich mit der Stützradkonsole 4 verbunden, so dass die Stützradkonsole 4 beim Ausfahren der Hubvorrichtung 5 im Uhrzeigersinn verschwenkt und das Stützrad 3 entsprechend aus der Arbeitsstellung A in die Transportstellung T angehoben wird. Wenn die Hubvorrichtung 5 eingefahren wird, wird die Stützradkonsole 4 entsprechend entgegen dem Uhrzeigersinn verschwenkt und das Stützrad 3 aus der Transportstellung T nach unten in die Arbeitsstellung A bewegt.

Zur Begrenzung der Bewegung der Stützradkonsole 4 ist eine Begrenzungsvorrichtung 7 vorgesehen, die gemäß der Darstellung der Fig. 3 einen Anschlagshebel 7.1 aufweist, der im Wesentlichen parallel zu der Hubvorrichtung 5 am anderen Lagerhalterelement 6.1 schwenkbeweglich gelagert ist. In dem der Stützradkonsole 4 zugewandten Endbereich weist der Anschlagshebel 7.1 eine Führung 7.11 in Form eines Langlochs auf, in der ein an der Stützradkonsole 4 angeordneter und seitlich vorstehender Führungsbolzen 4.1 geführt ist. Bei einer Schwenkbewegung der Stützradkonsole 4 bewegt sich der Führungsbolzen 4.1 in dem Langloch bzw. in der Führung 7.11 hin und her und die Länge der Führung 7.11 begrenzt dabei die Bewegungsmöglichkeit der Stützradkonsole 4. Das heißt, in der Transportstellung T liegt der Führungsbolzen 4.1 an einem Ende der Führung 7.11 an und in der Arbeitsstellung A entsprechend an dem anderen Ende der Führung 7.11.

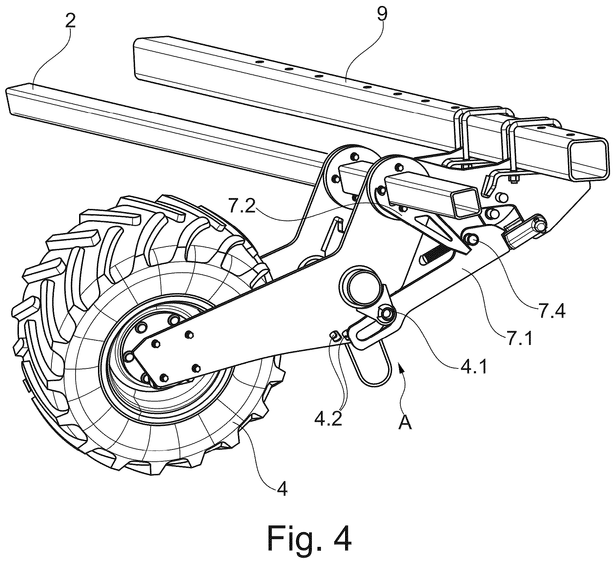

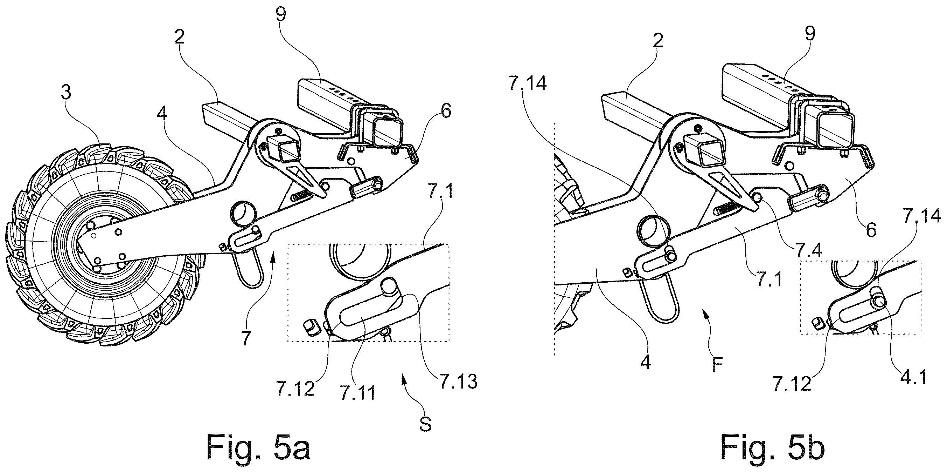

Die Darstellung der Fig. 4 zeigt die Begrenzungsvorrichtung 7 sowie den in der Führung 7.11 geführten Führungsbolzen 4.1 in der Arbeitsstellung. Das heißt, das Stützrad 3 ist maximal abgesenkt und eine weitere Absenkung wird durch die Anlage des Führungsbolzens 4.1 an dem oberen Ende der Führung 7.11 unterbunden. Die beiden Enden der Führung fungieren somit als Anschläge 7.12, 7.13, die auch in der vergrößerten Darstellung der Fig. 5a und 5b zu erkennen sind.

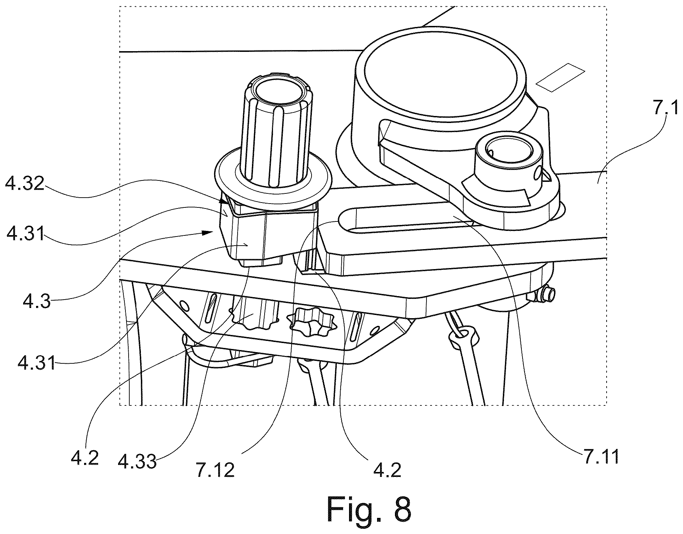

Zudem sind in der Darstellung der Fig. 4 zwei Einstecköffnungen 4.2 zu erkennen, in die wahlweise ein Steckanschlag 4.3 einsteckbar ist, der in der Darstellung der Fig. 3, aber in einer vergrößerten Ansicht auch in der Darstellung der Fig. 8 zu erkennen ist. Da gemäß Fig. 4 kein Steckanschlag 4.3 eingesteckt ist, ist es möglich, dass sich der Führungsbolzen 4.1 entlang der gesamten Länge der Führung 7.11 bewegt. Über einen Steckanschlag 4.3 lässt sich diese Bewegung begrenzen. In der Darstellung der Fig. 8 ist dahingehend bspw. zu erkennen, dass der Steckanschlag 4.3 bereits an der Außenseite des Anschlagshebels 7.1 anschlägt, bevor der Führungsbolzen 4.1 das Ende der Führung 7.11 erreicht hat. Somit lassen sich über den Steckanschlag 4.3 verschiedene Arbeitsstellungen A erreichen bzw. das Stützrad 3 lässt sich unterschiedlich weit absenken.

Zur Definition unterschiedlicher Arbeitsstellung A bzw. unterschiedlicher Stellungen der Stützradkonsole 4 kann der Steckanschlag 4.3 nun zunächst wahlweise in eine der beiden beabstandet zueinander angeordneten Einstecköffnungen 4.2 eingesteckt werden. Dadurch lassen sich zwei verschiedene Arbeitsstellungen A definieren.

Die Ausgestaltung des Steckanschlags 4.3 ist in der Darstellung der Fig. 8 zu erkennen. Dieser besteht im Wesentlichen aus einem stabförmigen Einsteckabschnitt 4.33, der in den Steckanschlag 4.3 einsteckbar ist, und einem einen gegenüber dem Steckanschlag 4.3 größeren Durchmesser aufweisenden Anschlagskopf 4.32, der somit in der eingesteckten Position seitlich gegenüber der Stützradkonsole 4 bzw. der Wange der Stützradkonsole 4 hervorsteht. Der Anschlagskopf 4.32 ist blockförmig ausgebildet und dieser weist vier Anschlagsflächen 4.31 auf, die je nach Orientierung des Anschlagskopfes 4.32 zur Bewegungsbegrenzung an der Außenseite des Anschlagshebels 7.1 anschlagen können.

So wie dies anhand der Darstellung der Fig. 8 weiterhin zu erkennen ist, ist der Anschlagskopf 4.32 exzentrisch zu dem Einsteckabschnitt 4.33 angeordnet. Dies führt dazu, dass durch die Ausrichtung des Steckanschlags 4.3, also die Orientierung beim Einstecken in die Einstecköffnung 4.2, dem Anschlagshebel 7.1 unterschiedliche Anschlagsflächen 4.31 zugewandt sind. Weiterhin ändert sich je nach Orientierung der Abstand der zugewandten Anschlagsfläche 4.31 aufgrund der exzentrischen Anordnung des Anschlagskopfes 4.32. In der Darstellung der Fig. 8 ist zu erkennen, dass der Steckanschlag mit den Ziffern 1 bis 4 versehen ist. Dies symbolisiert, dass der Steckanschlag 4.3 um 90 Grad gedreht werden kann, wodurch sich dann die Anschlagsposition und damit auch die Arbeitsstellung A ändern. Bei vier verschiedenen Stellungen pro Einstecköffnung 4.2 ergeben sich somit insgesamt acht verschiedene Anschlagspositionen plus eine Anschlagsposition ohne Steckanschlag 4.3. Noch deutlich mehr Anschlagpositionen lassen sich definieren, wenn der Steckanschlag 4.3 nicht nur in 90-Grad-Schritt in den Steckanschlag 4.3 eingesteckt werden kann. Die Darstellung der Fig. 8 lässt erkennen, dass die Einstecköffnungen 4.2 eine sternförmige Geometrie aufweisen, die insofern noch eine kleinteiligere Drehbewegung und damit noch mehr Anschlagspositionen ermöglicht.

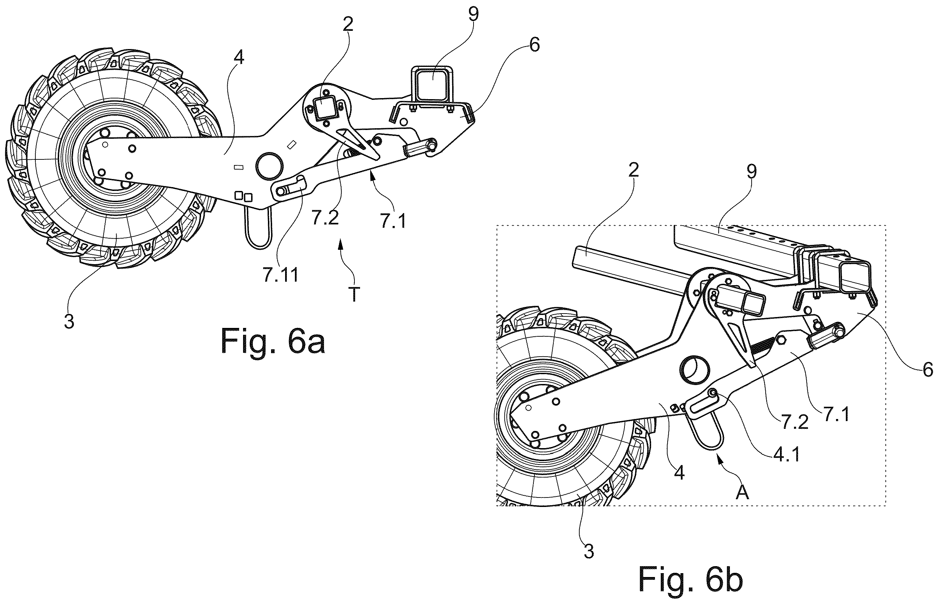

Die Ausgestaltung gemäß Fig. 5a, 5b sowie 6a und 6b zeigt im Wesentlichen die Begrenzungsvorrichtung 7 gemäß Fig. 4, allerdings weist die Führung 7.11 an einem Ende eine Abwinkelung 7.14 auf. Durch diese Abwinkelung 7.14 kann die Stützradkonsole 4 zuverlässig in der Arbeitsstellung A gesichert sein, so dass auch bei Fahrten auf unebenem Untergrund nicht zu einer Verstellung des Stützrades 3 kommen kann. Zudem kann so auch der Antrieb, unabhängig davon, ob zur Bewegung nun eine Drehung des Scharbalkens 3 oder eine Hubvorrichtung 5 verwendet wird, weitestgehend kraftfrei gehalten werden.

Wenn die Stützradkonsole 4 aus der Transportstellung T, in welcher der Führungsbolzen 4.1 zunächst an dem vorderen, der Transportstellung T zugeordneten, Anschlag 7.12 anliegt, in die Arbeitsstellung A bewegt wird, gleitet der Führungsbolzen 4.1 in der Führung 7.11 in Richtung des Anschlags 7.13 nach hinten. Ist die Stützradkonsole 4 bis in die Arbeitsstellung A verschwenkt, bewegt sich der Anschlagshebel 7.1 nach unten, so dass der Führungsbolzen 4.1 in die Abwinkelung 7.14 eintaucht. Somit kommt es zu einer selbsttätigen Verrastung und es ist dann in dieser Stellung nicht mehr möglich, die Stützradkonsole 4 zurückzubewegen. Die entsprechende Stellung des Anschlagshebels 7.1 mit eingerastetem Führungsbolzen 4.1 wird daher auch als Sperrstellung S bezeichnet.

Um die Stützradkonsole 4 wieder zurück in die Transportstellung T zu bewegen, muss der Anschlagshebel 7.1 aus der Sperrstellung S angehoben und in die Freigabestellung F überführt werden, in welcher der Führungsbolzen 4.1 in der Führung 7.11 hin- und hergleiten kann. Zum Anheben des Anschlagshebels 7.1 bzw. zur Überführung aus der Sperrstellung S in die Freigabestellung F kann ein externer Antrieb vorgesehen sein. Es kann allerdings auch vorgesehen sein, den Anschlagshebel 7.1 über den Freigabehebel 7.2 anzuheben. Der Freigabehebel 7.1 kann dafür auf dem Scharbalken 2 montiert sein, so dass dieser über eine Drehung des Scharbalkens 2 bewegt werden kann. Zum Zusammenwirken mit dem Anschlagshebel 7.1 weist dieser einen seitlich vorspringenden Führungsbolzen 7.4 auf, der zwischen dem Drehpunkt des Anschlagshebels 7.1 am Lagerhalter 6 und der Führung 7.11 angeordnet ist. Der Freigabehebel 7.2 kann nun bei einer Drehbewegung den Führungsbolzen 7.4 nach oben bewegen, wodurch sich der Anschlagshebel 7.1 ein Stück dreht. Dabei wird dann der Anschlagshebel 7.1 bzw. die Abwinkelung 7.14 von dem Führungsbolzen 4.1 abgehoben, so dass sich dieser dann wieder in der Führung 7.11 bewegen kann. Eine Bewegung der Stützradkonsole 4 in die Transportstellung T führt dann dazu, dass der Führungsbolzen 7.4 in der Führung 7.11 in Richtung des Anschlags 7.12 gleitet. Diese Endstellung ist in der Darstellung der Fig. 6a zu erkennen.

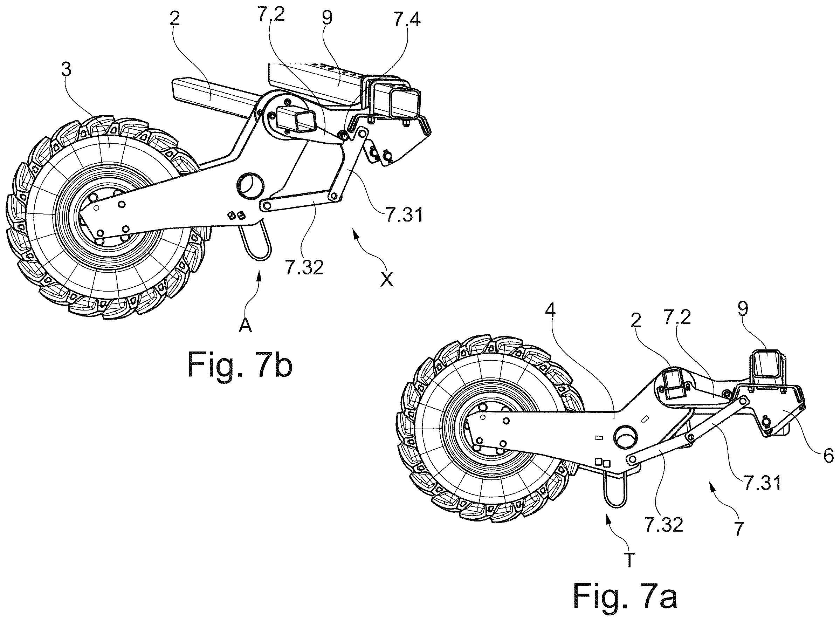

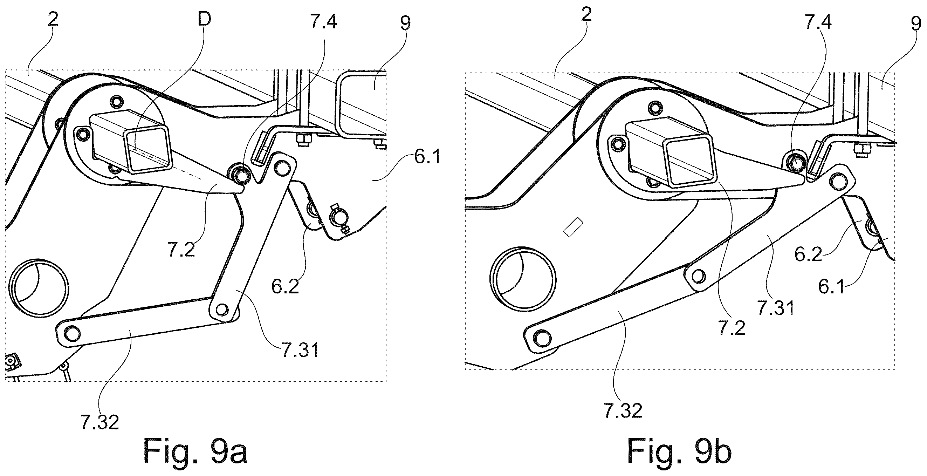

Eine weitere Ausgestaltung zeigen nun die Darstellungen der Fig. 7a, 7b sowie der Fig. 9a, 9b. Im Hinblick auf die grundsätzliche Ausgestaltung und Lagerung der Stützradkonsole 4 wird auf Vorstehendes verwiesen. Der wesentliche Unterschied zu dem vorstehend erläuterten Ausführungsbeispiel liegt in der Ausgestaltung der Begrenzungsvorrichtung 7. Denn die Begrenzungsvorrichtung 7 weist zwei Hebel 7.31, 7.32 auf, die an einem Ende schwenkbeweglich miteinander verbunden sind. Der Hebel 7.32 ist am anderen Ende mit der Stützradkonsole 4 und der Hebel 7.31 ist am anderen Ende mit dem Lagerhalter 6 verbunden. Dadurch bilden die beiden Hebel 7.32, 7.31, der Steg des Lageralters 6 und die Stützradkonsole 4 bzw. der abgewinkelte Teil der Stützradkonsole 4 ein Parallelogrammgestänge.

Die Darstellungen der Fig. 7a und 9b zeigen die Transportstellung T, bei welcher die Stützradkonsole 4 nach oben verschwenkt ist. In dieser Stellung ist der Winkel zwischen den beiden Hebeln 7.31, 7.32 sehr groß und dieser beträgt annähernd 180 Grad. In der abgesenkten Arbeitsstellung A, die in den Darstellungen der Fig. 7b und der Fig. 9a zu erkennen ist, ist der Winkel hingegen deutlich kleiner und er beträgt in der dargestellten Stellung in etwa 100 Grad.

Es kann vorgesehen sein, dass die Stützradkonsole 4 in der vorstehend beschriebenen Art und Weise bspw. über eine Drehung des Scharbalkens 2 oder auch über eine Hubvorrichtung 5 zwischen der Transportstellung T und der Arbeitsstellung A hin- und herbewegt werden kann. Den beiden Hebeln 7.31, 7.32 kann dabei eine Führungsfunktion zukommen. Zudem können aber die beiden Hebel 7.31, 7.32 auch dafür sorgen, dass die Bewegung der Stützradkonsole 4 begrenzt wird. Dafür kann die Bewegung der Hebel 7.31, 7.32 bspw. über entsprechende Anschläge, die in der Darstellung der Fig. 7a, 7b nicht mit dargestellt sind, begrenzt werden.

Ferner können die beiden Hebel 7.31, 7.32 aber mitunter auch zum Antrieb verwendet werden. Der hintere Hebel 7.31 kann dafür einen seitlich vorspringenden Führungsbolzen 7.4 aufweisen, so dass der hintere Hebel 7.31 über den um die Drehachse D drehbar gelagerten Freigabehebel 7.2 bewegt werden kann. Aufgrund der Koppelung der beiden Hebel 7.31, 7.32 mit der Stützradkonsole 4 kann dann somit durch die Bewegung des Hebels 7.31 auch die Stützradkonsole 4 bewegt werden. Gleichwohl kann aber durch das Zusammenwirken des Führungsbolzens 7.4 und des Freigabehebels 7.2 auch eine Begrenzung einer Bewegung des zweiten Hebels 7.31 und damit auch der Stützradkonsole 4 erreicht werden.

Insgesamt lässt sich mit der vorstehend beschriebenen Konstruktion das Stützrad 3 auf vergleichsweise einfache Art und Weise anheben und gleichzeitig wird ein kompakter Aufbau sichergestellt.

### Bezugszeichen:

- 1: Säschar
- 2: Scharbalken
- 3: Stützrad
- 4: Stützradkonsole
- 4.1: Führungsbolzen
- 4.2: Einstecköffnung
- 4.3: Steckanschlag
- 4.31: Anschlagsfläche
- 4.32: Anschlagskopf
- 4.33: Einsteckabschnitt
- 5: Hubvorrichtung
- 6: Lagerhalter
- 6.1: Lagerhalterelement
- 6.2: Lagerhalterelement
- 7: Begrenzungsvorrichtung
- 7.1: Anschlagshebel
- 7.11: Führung
- 7.12: Anschlag
- 7.13: Anschlag
- 7.14: Abwinkelung
- 7.2: Freigabehebel
- 7.31: Hebel
- 7.32: Hebel
- 7.4: Führungsbolzen
- 8: Drehlager
- 9: Maschinenrahmen
- 9.1: Befestigungsbügel
- 10: Sämaschine
- 10.1: Vorderwagen
- 10.2: Heckeinheit
- F: Freigabestellung
- S: Sperrstellung
- A: Arbeitsstellung
- T: Transportstellung
- D: Drehachse

## Patentansprüche

1. Sämaschine mit mehreren nebeneinander angeordneten Säscharen (1), die mit einem um eine Drehachse (D) drehbaren Scharbalken (2) derart verbunden sind, dass über eine Drehung des Scharbalkens (2) der Schardruck der Säscharen (1) eingestellt werden kann, und mit mindestens einem, vorzugsweise zwei, Stützrädern (3), die in Fahrtrichtung vor den Säscharen (1) angeordnet sind und über die die Sämaschine (10) gegenüber dem Untergrund abgestützt ist,
**dadurch gekennzeichnet,**
**dass** die Stützräder (3) an dem Scharbalken (2) gelagert sind.

2. Vorrichtung nach Anspruch 1, **dadurch gekennzeichnet, dass** die Stützräder (3) über eine Hubvorrichtung (5) zwischen einer Arbeitsstellung (A) und einer Transportstellung (T) hin und her bewegbar sind.

3. Vorrichtung nach einem der Ansprüche 1 oder 2, **dadurch gekennzeichnet, dass** die Stützräder (3) um die Drehachse (D) zwischen der Arbeitsstellung (A) und der Transportstellung (T) hin und her schwenkbar sind.

4. Vorrichtung nach einem der vorhergehenden Ansprüche, **dadurch gekennzeichnet, dass** die Stützräder (3) drehentkoppelt an dem Scharbalken (2) gelagert sind.

5. Vorrichtung nach einem der vorhergehenden Ansprüche, **dadurch gekennzeichnet, dass** die Stützräder (3) über eine Stützradkonsole (4) an dem Scharbalken (2) gelagert sind.

6. Vorrichtung nach einem der vorhergehenden Ansprüche, **gekennzeichnet durch** einen Maschinenrahmen (9) und einen mit dem Maschinenrahmen (9) verbundenen Lagerhalter (6), wobei die Hubvorrichtung (5) auf der einen Seite mit dem Lagerhalter (6) und auf der anderen Seite mit der Stützradkonsole (4) verbunden ist.

7. Vorrichtung nach einem der vorhergehenden Ansprüche, **gekennzeichnet durch** eine Begrenzungsvorrichtung (7) zur Begrenzung der Bewegung des Stützrades (3).

8. Vorrichtung nach Anspruch 7, **dadurch gekennzeichnet, dass** die Begrenzungsvorrichtung (7) einen Anschlagshebel (7.1) aufweist, der auf der einen Seite schwenkbeweglich an dem Lagerhalter (6) angelenkt ist und der auf der anderen Seite eine Führung (7.11) aufweist, in der ein Führungsbolzen (4.1) angeordnet ist.

9. Vorrichtung nach Anspruch 8, **dadurch gekennzeichnet, dass** der Anschlagshebel (7.1) zwischen einer Freigabestellung (F), in welcher das Stützrad (3) zwischen der Arbeitsstellung (A) und der Transportstellung (T) hin und her bewegbar ist und einer Sperrstellung (S), in welcher eine Bewegung des Stützrades (3) gesperrt ist, bewegbar ist.

10. Vorrichtung nach einem der Ansprüche 8 oder 9, **dadurch gekennzeichnet, dass** die beiden Enden der Führung (7.11) als Anschläge (7.12, 7.13) ausgebildet sind, wobei der Führungsbolzen (4.1) in der Transportstellung (T) an einem Anschlag (7.12) und in der Arbeitsstellung (A) an dem anderen Anschlag (7.13) anliegt.

11. Vorrichtung nach Anspruch 10, **dadurch gekennzeichnet, dass** die Führung (7.11) im Bereich eines Anschlags (7.12, 7.13), insbesondere im Bereich des der Arbeitsstellung (A) zugeordneten Anschlags (7.12), eine Abwinkelung (7.14) aufweist, wobei der Führungsbolzen (4.1) in der Sperrstellung (S) in der Abwinkelung (7.14) angeordnet ist.

12. Vorrichtung nach einem der Ansprüche 8 bis 11, **dadurch gekennzeichnet, dass** der Anschlagshebel (7.1) über einen Freigabehebel (7.2) aus der Sperrstellung (S) in die Freigabestellung (F) bewegbar ist.

13. Vorrichtung nach Anspruch 12, **dadurch gekennzeichnet, dass** der Freigabehebel (7.2) um die Drehachse (D) drehbar gelagert ist.

14. Vorrichtung nach einem der Ansprüche 5 bis 13, **dadurch gekennzeichnet, dass** die Stützradkonsole (4) mindestens eine Einstecköffnung (4.2) zum Einstecken eines Steckanschlags (4.3) aufweist, wobei der Steckanschlag (4.3) eine Bewegung der Stützradkonsole (4) gegenüber dem Steckanschlag (4.3) begrenzt.

15. Vorrichtung nach einem der Ansprüche 5 bis 14, **gekennzeichnet durch** zwei schwenkbeweglich miteinander verbundene Hebel (7.31, 7.32), wobei einer der Hebel (7.31) schwenkbeweglich an der Stützradkonsole (4) und der andere Hebel (7.32) schwenkbeweglich an dem Lagerhalter (6) angelenkt ist.
